Europäisches Patentamt

European Patent Office

Office européen des brevets

(11) Veröffentlichungsnummer : **0 280 692 B1**

(19)

(12) # EUROPÄISCHE PATENTSCHRIFT

(45) Veröffentlichungstag der Patentschrift :
**15.04.92 Patentblatt 92/16**

(21) Anmeldenummer : **87904525.0**

(22) Anmeldetag : **02.07.87**

(86) Internationale Anmeldenummer :
**PCT/EP87/00360**

(87) Internationale Veröffentlichungsnummer :
**WO 88/00317 14.01.88 Gazette 88/02**

(51) Int. Cl.⁵ : **F23K 5/00, F23D 14/46**

(54) **BRENNSCHNEIDMASCHINE MIT EINEM SCHNEIDBRENNER UND ZUFÜHRUNGEN FÜR HEIZSAUERSTOFF, HEIZGAS UND SCHNEIDSAUERSTOFF.**

(30) Priorität : **04.07.86 DE 3622446**

(43) Veröffentlichungstag der Anmeldung :
**07.09.88 Patentblatt 88/36**

(45) Bekanntmachung des Hinweises auf die
Patenterteilung :
**15.04.92 Patentblatt 92/16**

(84) Benannte Vertragsstaaten :
**DE GB**

(56) Entgegenhaltungen :
**FR-A- 2 387 402**
**O. Beedgen, "Öl- und Gasfeuerungstechnik",**
**Werner-Verlag, 2. Auflage, 1984, Seiten**
**331-347**

(73) Patentinhaber : **AUTE AG Gesellschaft für**
**autogene Technik**
**10, Rue St. Honoré**
**CH-2000 Neuchâtel (CH)**

(72) Erfinder : **LOTZ, Horst, K.**
**Fasanenweg 7**
**W-6240 Königstein-Johanniswald (DE)**
Erfinder : **MANNING, Glyndwr**
**Furlongs, Boothorpe Lane, Blackfordby**
**Burton-on-Trent Staffordshire (GB)**
Erfinder : **MAAG, Urs, Albert**
**Peteracher 1**
**CH-8126 Zumikon (CH)**

(74) Vertreter : **Blumbach Weser Bergen Kramer**
**Zwirner Hoffmann Patentanwälte**
**Sonnenberger Strasse 100**
**W-6200 Wiesbaden 1 (DE)**

EP 0 280 692 B1

## Beschreibung

Bei derartigen bekannten Brennschneidmaschinen spielt die Steuerung der Gaszufuhr eine bedeutende Rolle. Brennschneidmaschinen mit einer einfachen Ausstattung tragen einen Schneidbrenner mit austaschbarer Schneiddüse, die mittels Absperrventil und gegebenen falls Druckminderer zum Verringern der Vordrücke in Leitungen und Behältern des jeweiligen Gases, nämlich Sauerstoff und Brenngas, für die notwendigen Schlauch- und Rohrleitungen versorgt werden. Moderne Hochleistungs-Brennschneidmaschinen mit einem Starkschneidbrenner benötigen zum Brenngas einen Heizsauerstoff mit geeignetem Druck und der richtigen Menge zur Erzeugung einer guten Heizflamme und darüber hinaus einen Schneidsauerstoff mit gegebenenfalls hohem Druck und einer anderen Zuführmenge. Brennschneidmaschinen mit zwei oder mehr Brennern benötigen als normale Ausstattung zur Fernsteuerung und zum Dauerbetrieb für jedes benötigte Gas Absperrventile, Filter, Manometer für den Eingangsdruck, Druckminderer oder Druckregler, die einen möglichst gleichmäßigen, unveränderten Arbeitsdruck erzeugen, Manometer für den Arbeitsdruck, Magnetventile zum Zu- und Abschalten und in manchen Fällen noch ein Einstellventil in Form eines Nadelventils zum genauen Einstellen der vorreduzierten Drücke und Mengen. Alle diese Elemente zur Versorgung und Steuerung der zuzuführenden Gase sind an einer Gassteuertafel oder einem Gassteuerstand bzw. -gerüst zusammengefaßt. Das macht eine fast unüberschaubare Verbindung von Rohren erforderlich, und die Gassteuertafeln oder Gassteuergerüste mit den zugehörigen Rohrverbindungen beanspruchen einen nicht unerheblichen Platz und gewährleisten nicht mehr die erforderliche Übersichtlichkeit. Die Verbindung von Rohrteilen, die sauerstoff- und gasfrei sein müssen, erfolgt sinnvoll mit Lötverbindungen, gegebenenfalls unter Einsatz von Lötmuffen und Verbindungsstellen, die nach dem Auflöten eine gasdichte Verschraubung mit entsprechend ausgestatteten Rohrteilen oder Versorgungs- bzw. Steuerelementen erlauben. Damit ist es erforderlich, daß zum Aufbau einer Versorgungs- bzw. Steuerstrecke für ein Gas an jedem Eingang und Ausgang des Steuerstandes und vor allem jedes Versorgungs- bzw. Steuerelements Löt- und Schraubverbindungen vorhanden sind, und zusätzlich sind zwischen den Elementen Verbindungsrohre erforderlich.

Diese vielen Löt- und Schraubstellen sowie die handwerkliche Fertigung, die beide trotz umfangreicher und sorgfältiger Prüfung fehlerbehaftet sind oder rachträglich zu Fehlstellen führen können, stellen einen großen Risikofaktor dar, indem Undichtigkeiten nicht nur zu Funktionsstörungen, sondern zu einer Brand- und Explosionsgefahr führen. Damit kann auf regelmäßige Prüf- und Wartungsvorgänge nicht verzichtet werden, und dieses Prüfen sowie ein gegebenenfalls erforderliches Reparieren ist in den umfangreichen, unübersichtlichen und zum Teil schwer zugänglichen Bereichen sehr schwierig und aufwendig und damit im Ergebnis alles andere als zufriedenstellend. Außerdem wird durch die langen Rohrwege eine unerwünscht große Steuerfunktionsstrecke erzeugt.

Um den komplizierten Anschluß von Rohrbiegungen durch eine Vielzahl von Muffen sowie einen dadurch zu großen Platzbedarf bei Gassteuertafeln zu vermeiden, ist aus der FR-A 2 387 402 bereits eine für Brennschneidmaschinen verwendbare Gassteuervorrichtung bekannt, die in die Gaszuführleitung ohne Zwischenverrohrungen und Verbindungsteile einschaltbar ist und Steuerungsvorrichtungen und Überwachungsvorrichtungen aufweist. Zudem ist auch eine Druckmindervorrichtung und eine als Druckanzeigevorrichtung ausgebildete Überwachungseinrichtung hinsichtlich des zugeführten Gases vorgesehen.

Der Erfindung liegt die Aufgabe zugrunde, eine Gassteuervorrichtung einer Brennschneidmaschine zu schaffen, die alle notwenidgen Steuerfunktionen aufweist, wobei ein besonderer Gassteuerstand, an dem die Steuer- und Überwachungselemente der Gassteuervorrichtung zusammengefaßt sind, vermieden wird und die Wartungsfreundlichkeit der Brennschneidmaschine verbessert werden.

Diese Aufgabe wird erfindungsgemäß dadurch gelöst, daß bei einer Brennschneidmaschine der eingangs genannten Art in den Zuführleitungen ohne Zwischenverrohrungen und Verbindungsteile zur Vermeidung einer umfangsreichen Steuerfunktionsstrecke je eine Gassteuervorrichtung im Bereich der Brennschneidmaschine vorgesehen ist, die ein Mengen- und Drucksteuerorgan, eine Druckminderereinrichtung, eine Druckanzeigeeinrichtung und ein Absperrventil umfaßt.

Eine vorteilhafte Ausführungsform besteht darin, daß die Gassteuervorrichtung mit einer Druckminder- und/oder Druckregeleinrichtung versehen ist, die als federbelastetes oder servogesteuertes Kolbenventil mit O-Ring-Dichtung ausgebildet ist.

Zweckmäßigerweise weist die Druckminder- oder Druckregeleinrichtung eine pneumatische oder elektromotorische Fernsteuerung auf.

In ihrer weiteren Ausbildung besitzt die Gassteuervorrichtung eine Druckanzeigeeinrichtung, die aus direkt in das Gehäuse der Gassteuervorrichtung vor und hinter der Druckminder- bzw. Druckreglereinrichtung eingeschraubten Manometern besteht. Um den Austausch defekter Manometer während des Betriebs vornehmen zu können, sind vor den Manometern Druckanzeigeeinrichtungen und Absperrventile vorgesehen.

Eine Weiterbildung der Erfindung besteht darin, daß die Gasssteuervorrichtungeine Absperreinrichtung aufweist, die aus einem auf das Gehäuse der Gassteuervorrichtung mit Dichtung aufgesetzten Magneten mit Dichtkegel, Dichtplatte oder ähnlichem besteht, der bzw. die den Gasdurchflußkanal, welcher die beiden senkrechten Kanalteile im Gehäuse der Gassteuervorrichtung verbindet, gegeneinander trennend abdichtet oder freigibt.

Gemäß einer Weiterbildung sieht die Erfindung vor, daß in der Gassteuereinheit ein handbetätigtes Absperr- oder Einstellventil oder mehrere eingangs- oder ausgangsseitig angeordnete Ventile vorgesehen sind.

In vorteilhafter Weise ist weiter vorgesehen, daß die Gassteuervorrichtung ein oder mehrere austauschbare Filter auf der Eingangsseite besitzt. Zur Veränderung der Druckeinstellung und des Arbeitsdrucks auf Zündflammen- oder Sparflammendruck ist ein fernbetätigter Hilfsantrieb am Gehäuse der Gassteuervorrichtung vorgesehen. Um einen Austausch ohne weiteres zu ermöglichen, besitzt das Gehäuse der Gassteuervorrichtung Flanschanschlußeinrichtungen, die ein schnelles Auswechseln ermöglichen.

Weitere vorteilhafte, zweckmäßige Ausführungsformen sind den weiteren Unteransprüchen zu entnehmen. Die Erfindung soll nachstehend anhand eines Ausführungsbeispiels unter Bezugnahme auf die beigefügte Zeichnung näher erläutert werden. In den Zeichnungen zeigen:

Fig. 1 einen Teilschnitt einer erfindungsgemäßen Gassteuervorrichtung für Brennschneidmaschinen und

Fig. 2 eine Draufsicht auf die Vorrichtung nach Fig. 1.

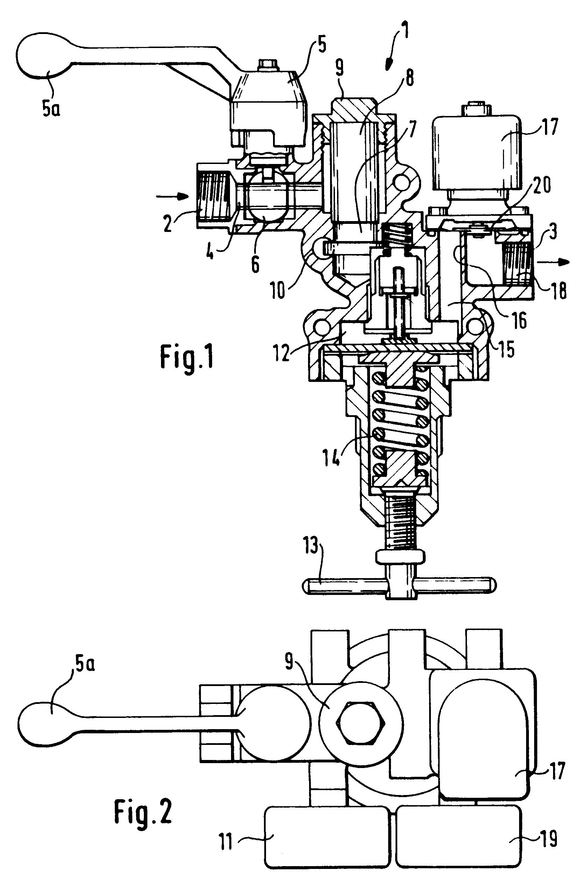

In Fig. 1 ist mit 1 eine Gassteuervorrichtung bezeichnet, die einen Eingangsstutzen 2 und einen Ausgangsstutzen 3 besitzt. Der Eingangsstutzen 2 und der Ausgangsstutzen 3 sind mit den im einzelnen nicht dargesteilten Flanschen und Verschraubungen versehen, so daß die Gassteuervorrichtung 1 ohne Schwierigkeiten in die Versorgungsleitungen für Heizsauerstotf, Heizgas und Schneidsauerstotf eingefügt werden kann und dann ein Austausch ohne Schwierigkeiten bei einem Minimum an Zeit möglich ist. Der Eingangskanal 4 besitzt ein Absperrventil 5, das mit einem Handgrift 5a versehen ist und den Eingangskanal 4 mit seinem kugelförmigen Ventilkörper 6 abschließt. Der Eingangskanal 4 mündet in einen rechtwinklig zu diesem verlautenden Filterraum 7, in dem ein Filter 8 sich befindet. Der Filterraum 7 ist mit einem Verschlußdeckel 9 oben abgeschlossen, so daß durch Entfernung des Verschlußdeckels 9 der Filter 8 ohne Schwierigkeiten ausgewechselt werden kann. Die Filterkammer 7 ist mit einer Bohrung 10 verbunden, an deren Ende ein Manometer 11 sitzt, wie es in Fig. 2 zu sehen ist. Der Filterraum 7 ist an seinem unteren Ende mit einem Druckminderer 12 verbunden, der in üblicher Weise arbeitet und der durch eine Handspindel 13, die auf eine Feder 14 wirkt, eingestellt werden kann. Die Ausgangsbohrung 15 der Druckminderer- oder Druckreglereinrichtung 12 ist über eine Bohrung 16 mit einem Manometer 19 (Fig. 2) verbunden und führt über ein Magnetventil 17 zum Ausgangskanal 18 und weiter über den Ausgangsstutzen 3 mit der im einzelnen nicht dargestellten Flanschverbindung in die Leitung zum Brenner.

Die Druckminderer- oder Reglereinrichtung 12 kann ein federbelastetes oder servogesteuertes Kolbenventil mit O-Ring-Dichtung aufweisen, wodurch die Aiterung von Membranen bei bisher bekannten Druckreglern oder Druckminderern vermieden ist. Durch das vorgesehene Absperrventil 5 ist der Austausch von defekten Manometern 11, 19 möglich, oder verschmutzte Filter 8 können während des Betriebs ausgewechselt werden. Im einzelnen kann die Gassteuervorrichtung noch Abänderungen in bezug auf die Betriebserfordernisse erfahren, und es können weitere Absperrund Einstellventile eingangs- oder ausgangsseitig vorgesehen sein. Zur Veränderung der Druckeinstellung von Arbeitsdruck auf Zündflammen- oder Sparflammen-Sicherheitsflammendruck kann ein fernbetätigter Hilfsantrieb am Gehäuse der Gassteuervorrichtung 1 angeordnet sein. Des weiteren können der Regler oder der Druckminderer pneumatisch oder elektromotorisch ferngesteuert werden. Die Gassteuervorrichtung 1 läßt sich so ausbilden, daß sie für verschiedenen Gas Verwendung finden kann, indem sie eine entsprechende Einstellung erfährt, wodurch die Lagerhaltung und die Handhabung, insbesondere auch die Reparatur und der Einsatzteilaustausch, wesentlich erleichtert werden. Eine nicht dargestellte Bypassleitung in der Gassteuervorrichtung 1 ermöglicht einen Zündflammenbetrieb. Eine derartige minimale Zündflammenversorgung kann auch dadurch erreicht werden, daß die normale Versorgungskanäle durch ein Stellventil mit getriebenem Motor und Endschalter verengt werden. Die so beschriebene Brennschneidmaschine mit der erfindungsgemäßen Gassteuereinheit vermeidet, bisher übliche umfangsreiche Gassteuertafeln oder Gassteuerstände bzw. -gerüste, indem eine multifunktionale Einheit geschaffen wurde, indem eine multifunktionale Einheit geschaffen wurde, die in der Zufuhrleitung punktuell arbeitet und eine umfangreiche Steuerfunktionsstrecke vermeidet. Die Betriebssicherheit wird wesentlich erhöht, und die Wartung ist vereinfacht; die Brennschneidmaschine kann übersichtlicherweise bei Betriebsstörungen im gastechnischen Teil durch einfachen Austausch der Gassteuervorrichtung schnell und problemlos wieder betriebsbereit gemacht werden. Das Magnetventil 17 besitzt einen Dichtkegel oder eine Dichtplatte 20 als Ventilglied und kann als Absperreinrichtung betrieben werden.

## Patentansprüche

1. Brennschneidmaschine mit einem Schneidbrenner und Zuführungen für Heizsauerstoff, Heizgas und Schneidsauerstoff, wobei in den Zuführleitungen ohne Zwischenverrohrungen und Verbindungsteile zur Vermeidung einer umfangreichen Steuerfunktionsstrecke je eine Gassteuervorrichtung (1) im Bereich der Brennschneidmaschine vorgesehen ist, die ein Mengen- und Drucksteuerorgan (5, 6), eine Druckminderereinrichtung (12, 14), eine Druckanzeigeeinrichtung (11, 19) und ein Absperrventil (17) umfaßt.

2. Brennschneidmaschine nach Anspruch 1, dadurch gekennzeichnet, daß die Gassteuervorrichtung (1) eine Druckminderer- oder Druckregeleinrichtung (12) aufweist, die als federbelastetes oder servogesteuertes Kolbenventil mit O-Ring-Dichtung ausgebildet ist.

3. Brennschneidmaschine nach Anspruch 1, dadurch gekennzeichnet, daß die Druckminderer- oder Regeleinrichtung (12) pneumatisch oder elektromotorisch angesteuert ist.

4. Brennschneidmaschine nach einem der Ansprüche 1 bis 3, dadurch gekennzeichnet, daß die Gassteuervorrichtung (1) eine Druckanzeigeeinrichtung (11, 19) besitzt, die aus direkt in das Gehäuse der Gassteuervorrichtung (1) vor und hinter der Druckminder- bzw. Druckregeleinrichtung (12) eingeschraubten Manometern (11, 19) besteht.

5. Brennschneidmaschine nach Anspruch 1, dadurch gekennzeichnet, daß zum Austausch defekter Manometer (11, 19) während des Betriebs Absperrventile (5) in die Gassteuervorrichtung (1) eingeschraubt sind.

6. Brennschneidmaschine nach einem der Ansprüche 1 bis 5, dadurch gekennzeichnet, daß die Gassteuervorrichtung (1) ein Magnetventil (17) aufweist, das aus einem auf das Gehäuse der Gassteuervorrichtung (1) mit Dichtung aufgesetzten Magneten mit Dichtkegel oder Dichtplatte (20) oder ähnlichem besteht, der bzw. die den Gasdurchflußkanal (15, 18) abdichtet oder freigibt.

7. Brennschneidmaschine nach einem der Ansprüche 1 bis 6, dadurch gekennzeichnet, daß die Gassteuervorrichtung (1) wenigstens ein Sandbetätigtes Absperr- oder Einstellventil (5, 6) am Eingangskanal (4) oder am Ausgangskanal (18) aufweist.

8. Brennschneidmaschine nach einem der Ansprüche 1 bis 7, dadurch gekennzeichnet, daß die Gassteuervorrichtung (1) ein oder mehrere austauschbare Filter (8) auf der Eingangsseite enthält.

9. Brennschneidmaschine nach einem der Ansprüche 1 bis 8, dadurch gekennzeichnet, daß am Gehäuse ein fernbetätigter Hilfsantrieb zur Veränderung der Druckeinstellung auf Zündflammen- oder Sparflammen-Sicherheitsflammendruck (Arbeitsdruck) angebracht ist.

10. Brennschneidmaschine nach einem der Ansprüche 1 bis 8, dadurch gekenneichnet, daß an der Gassteuervorrichtung (1) zur Zündflammenversorgung ein Bypass vorgesehen ist.

11. Brennschneidmaschine nach einem der Ansprüche 1 bis 10, dadurch gekennzeichnet, daß das Gehäuse der Gassteuervorrichtung (1) Flanschanschlußeinrichtungen (2, 3) aufweist, die ein schnelles Auswechseln in der Leitung ermöglichen.

12. Brennschneidmaschine nach einem der Ansprüche 1 bis 11, gekennzeichnet durch eine Gassteuervorrichtung (1) mit fluchtend oder in parallelversetzten Ebenen verlaufenden Eingangs- (4) und Ausgangskanälen (18) mit einem Absperrventil (6, 5) am Eingangskanal (4) und mit einem Magnetventil (17) am Ausgangskanal (18), mit einer rechtwinklig zum Eingangskanal (4) rechtwinklig verlaufenden Filterkammer (7), die oben zum Auswechseln des Filters (8) mit einem Verschlußdeckel (9) versehen ist, mit einer Druckminderereinrichtung (12), in die der Filterraum (7) einmündet und deren Ausgangsbohrung (15) über ein Magnetventil (17) mit dem Ausgangskanal (18) verbunden ist.

13. Brennschneidmaschine nach einem der Ansprüche 1 bis 12, dadurch gekennzeichnet, daß die Gassteuervorrichtung (1) für unterschiedliche Gase in allen Zuführleitungen verwendbar ist.

## Claims

1. A gas cutting machine comprising a cutting torch and supply means for fuel oxygen, fuel gas and cutting oxygen, wherein the supply lines each contain a gas control device (1) which, for the purpose of avoiding any extensive control function path, has no intermediate pipelines and connecting members, the said gas control device (1) being provided in the area of the gas cutting machine and comprising a flow and pressure control means (5, 6), a pressure reducing means (12, 13), a pressure indicating means (11, 19) and a shut-off valve (17).

2. A gas cutting machine according to claim 1, characterised in that the gas control device (1) comprises a pressure reducer or pressure regulator means (12) constructed in the form of a spring-biased or servo-controlled spool valve with an O-ring seal.

3. A gas cutting machine according to claim 1, characterised in that the pressure reducer or regulator means

EP 0 280 692 B1

(12) is controlled pneumatically or by electric motor.

4. A gas cutting machine according to any one of claims 1 to 3, characterised in that the gas control device (1) comprises a pressure indicator means (11, 19) which consists of pressure gauges (11, 19) screwed directly into the housing of the gas control device (1) upstream and downstream of the pressure reducer or pressure regulator means (12).

5. A gas cutting machine according to claim 1, characterised in that shut-off valves (5) are screwed into the gas control device (1) for the purpose of replacing defective pressure gauges (11, 19) during operation.

6. A gas cutting machine according to any one of claims 1 to 5, characterised in that the gas control device (1) comprises a solenoid valve (17) which consists of a magnet fitted with a seal on the housing of the gas control device (1) and having a sealing cone or sealing plate (20) or the like to seal off or free the gas flow duct (15, 18).

7. A gas cutting machine according to any one of claims 1 to 6, characterised in that the gas control device 1 comprises at least one manually actuated shut-off or adjusting valve (5, 6) at the entry duct (4) or at the exit duct (18).

8. A gas cutting machine according to any one of claims 1 to 7, characterised in that the gas control device (1) contains one or more replaceable filters (8) on the entry side.

9. A gas cutting machine according to any one of claims 1 to 8, characterised in that a remote-actuated auxiliary drive for changing the pressure setting to pilot or safety flame pressure (working pressure) is provided on the housing.

10. A gas cutting machine according to any one of claims 1 to 8, characterised in that a bypass is provided on the gas control device (1) for the pilot light supply.

11. A gas cutting machine according to any one of claims 1 to 10, characterised in that the housing of the gas control device (1) has flange connecting means (2, 3) allowing rapid replacement in the line.

12. A gas cutting machine according to any one of claims 1 to 11, characterised by a gas control device (1) having entry and exit ducts (4, 18 respectively) extending in line or in parallel-offset planes, with a shut-off valve (6, 5) at the entry duct (4) and a solenoid valve (17) at the exit duct (18), with a filter chamber (7) extending at right angles to the entry duct (4) and having a lid (9) at the top for replacement of the filter (8), with a pressure reducer means (12) into which the filter chamber (7) leads and the exit bore (15) of which is connected to the exit duct (18) via a solenoid valve (17).

13. A gas cutting machine according to any one of claims 1 to 12, characterised in that the gas control device (1) is usable for different gases in all the supply lines.

**Revendications**

1. Machine d'oxycoupage comportant un chalumeau coupeur et des conduites d'oxygène de chauffage, de gaz de chauffage et d'oxygène de coupage, tandis que dans chacune des canalisations d'amenée, sans tuyauteries intermédiaires et sans adaptateur afin d'éviter un allongement de la fonction commande, il est prévu, dans le secteur de la machine d'oxycoupage, un dispositif de commande de gaz (1), qui comporte un organe de commande (5,6) de débit et de pression, un mécanisme de détente (12, 14), une installation d'indication de pression (11, 19) et une vanne d'arrêt (17).

2. Machine d'oxycoupage selon la revendication 1, caractérisée en ce que le dispositif de commande de gaz (1) comporte un mécanisme de détente ou de régulation de pression (12), qui est une vanne à piston commandée par ressort ou servocommande et comportant un joint torique d'étanchéité.

3. Machine d'oxycoupage selon la revendication 1, caractérisée en ce que le mécanisme de détente ou de régulation de pression (12) est à commande pneumatique ou électromotrice.

4. Machine d'oxycoupage selon l'une des revendications 1 à 3, caractérisée en ce que le dispositif de commande de gaz (1) possède une installation d'indication de pression (11, 19), qui est constituée de manomètres (11, 19) directement vissés dans le bâti du dispositif de commande de gaz (1) avant et après le mecanisme de détente et de régulation de pression (12).

5. Machine d'oxycoupage selon la revendication 1, caractérisée en ce que des vannes d'arrêt (5) sont vissées dans le dispositif de commande de gaz (1) pour permettre l'échange d'un manomètre (11, 19) défectueux, lors du fonctionnement.

6. Machine d'oxycoupage selon l'une des revendications 1 à 5, caractérisée en ce que le dispositif de commande de gaz (1) présente une électrovanne (17) constituée d'un aimant, pourvu d'un joint, placé sur le bâti du dispositif de commande de gaz (1), lequel aimant comporte une bague bicône ou un disque d'étanchéité (20) ou analogue, laquelle ou lequel obture ou libère le canal (15, 18) de passage du gaz.

7. Machine d'oxycoupage selon l'une des revendications 1 à 6, caractérisée en ce que le dispositif de commande de gaz (1) présente au moins une vanne d'arrêt ou de réglage (5, 6), commandable à la main, sur le canal d'entrée (4) ou le canal de sortie (18).

8. Machine d'oxycoupage selon l'une des revendications 1 à 7, caractérisée en ce que le dispositif de commande de gaz (1) comporte un ou plusieurs filtres (8) échangeables, côté entrée.

9. Machine d'oxycoupage selon l'une des revendications 1 à 8, caractérisée en ce que, sur le bâti, une commande auxiliaire actionnable à distance est raccordée servant à modifier le réglage de la pression de la veilleuse d'allumage, de la veilleuse de la flamme de sécurité (pression de travail).

10. Machine d'oxycoupage selon l'une des revendications 1 à 8, caractérisée en ce que, pour l'alimentation de la veilleuse d'allumage un by-pass est prévu dans le dispositif de commande de gaz (1).

11. Machine d'oxycoupage selon l'une des revendications 1 à 10, caractérisée en ce que le bâti du dispositif de commande de gaz (1) présente des installations (2, 3) de raccordement à bride, qui permettent un échange rapide dans la conduite.

12. Machine d'oxycoupage selon l'une des revendications 1 à 11, caractérisée par un dispositif de commande de gaz (1) comportant des canaux d'entrée (4) et des canaux de sortie (18), alignes ou décalés dans des plans parallèles, une soupape d'arrêt (6, 5) sur le canal d'entrée (4) et une électrovanne (17) sur le canal de sortie (18), une chambre de filtrage (7) perpendiculaire au canal d'entrée (4), pourvue d'un couvercle de fermeture (9) en vue de l'échange du filtre (8) par le haut, et un mécanisme de détente (12), dans lequel débouche la chambre de filtrage (7) et dont l'alésage de sortie (15) est relié, par l'intermédiaire d'une électrovanne (17) au canal de sortie (18).

13. Machine d'oxycoupage selon l'une des revendications 1 à 12, caractérisée en ce que le dispositif de commande de gaz (1) est utilisable pour différents gaz dans toutes les canalisations d'amenée.

Fig.1

Fig.2